# EUROPEAN PATENT APPLICATION

(11) **EP 1 009 145 A1**
(43) Date of publication of application: **14.06.2000**
(21) Application number: 98310186.6
(22) Date of filing: 11.12.1998
(51) Int. Cl.: H04M 1/72, H04M 1/65

(54) **Message control system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

Under the control of a keypad 121, a message generation unit 113 retrieves pre-recorded messages stored in a store 114 (or generates them synthetically) and transmits them to the exchange connection 132. A switch 125, under the control of the control unit 112, selects the output from the speech generation unit 113 when the speech generation unit 113 is in operation, and selects the conventional output from the handset microphone 104 at other times. If a user wishes to transmit a message without speaking, for example in a situation where to do so would be disruptive, or disturb other people. he operates a predetermined sequence of key strokes on the keypad 121 which is recognised by the control unit 112. This causes the control unit to operate the switch 110 to disconnect the mouthpiece 104 from the exchange connection 123, and to connect the speech generation unit 113 to the exchange connection instead. Further key strokes then cause the speech generation unit to select a message from the store 114 for transmission over the exchange connection 123. Incoming signals from the exchange connection 103 to the handset earpiece 105 are received normally, allowing a conversation to take place.

## Description

This invention relates to telephone apparatus.

Users of telephones, particularly but not exclusively mobile (cellular) telephones, sometimes receive calls in situations where they are not able to speak, or where to do so would be disruptive, or disturb other people. For example, they may be in a meeting, presentation, cinema or the like. Alternatively, the user may not wish the subject matter of the phone call to be overheard by people in his physical presence. Users in noisy environments may be unable to make themselves heard by the other party to the call. There are also users who have difficulty in speaking, for example because of a speech impediment. However, in all these situations the user is still able to operate the telephone keypad, and to hear the calling party.

Answering machines or network-based answering services are often used in such circumstances, but these only allow calls to be answered and invite a message to be left. The called party cannot respond to the calling party in real time.

According to the invention there is provided telephone apparatus comprising:
message generation means for generating a voice message;
control means, controllable by a first party to a telephone call, for controlling the message generation means; and
transmission means for transmitting said message to the other party or parties to the call.

The telephone apparatus may be embodied within customer equipment, for example a telephone handset connected to the telephone network by a fixed, or wireless connection, or it may alternatively be embodied within telephone network equipment, the control means being arranged to receive control instructions from the first party. In either case, the control means is preferably controllable by the use of a key pad on a telephone handset.

Preferably, the control means comprises means to select a message from a plurality of stored messages. The message generation means may comprise a store of one or more pre-recorded messages, having playback means for playing the recorded messages. Alternatively, or additionally, it may include a voice synthesiser, the control means controlling the voice synthesiser to generate voice messages.

This invention allows a user to select a voice message using the telephone keypad, for the other party to the call to hear, without the user having to speak. He can thus carry out a simple conversation with the other party, to whom he can listen in the conventional way by means of the earpiece of his handset.

Embodiments of the invention will now be described by way of example with reference to the Figures, in which:
Figure 1 is a schematic representation of a customer telephone apparatus embodying the invention; and
Figure 2 is a schematic representation of a network-based system according to the invention.
Figure 3 is a schematic representation of a stand-alone device for use with a customer telephone apparatus.

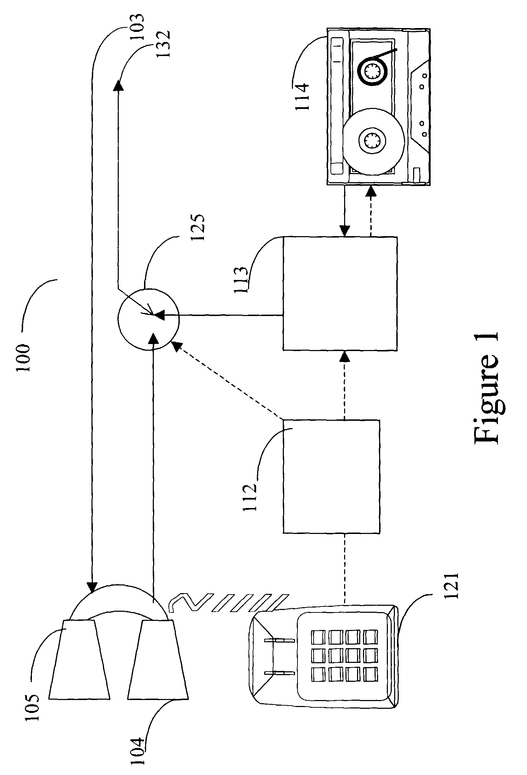

In the embodiment of Figure 1, a customer equipment 100 connected by an exchange connection 103/132 to the network (fixed or cellular) is provided with a conventional handset having an earpiece 105, a mouthpiece 104 and a keypad 121. In addition to its conventional function of generating signals for transmission over the network to initiate calls, the keypad 121 is used to control a control unit 112, which controls a message generation unit 113. The message generation unit retrieves pre-recorded messages stored in a store 114 (or generates them synthetically) and transmits them to the exchange connection 132. A switch 125, under the control of the control unit 112, selects the output from the speech generation unit 113 when the speech generation unit 113 is in operation, and selects the conventional output from the handset microphone 104 at other times. Incoming signals from the exchange connection 103 to the handset earpiece 105 are received normally.

In use, when a user wishes to transmit a message without speaking, he operates a predetermined sequence of key strokes on the keypad 121 which is recognised by the control unit 112. This causes the control unit to operate the switch 110 to disconnect the mouthpiece 104 from the exchange connection 123, and to connect the speech generation unit 113 to the exchange connection instead. Further key strokes then cause the speech generation unit to select a message from the store 114 for transmission over the exchange connection 123.

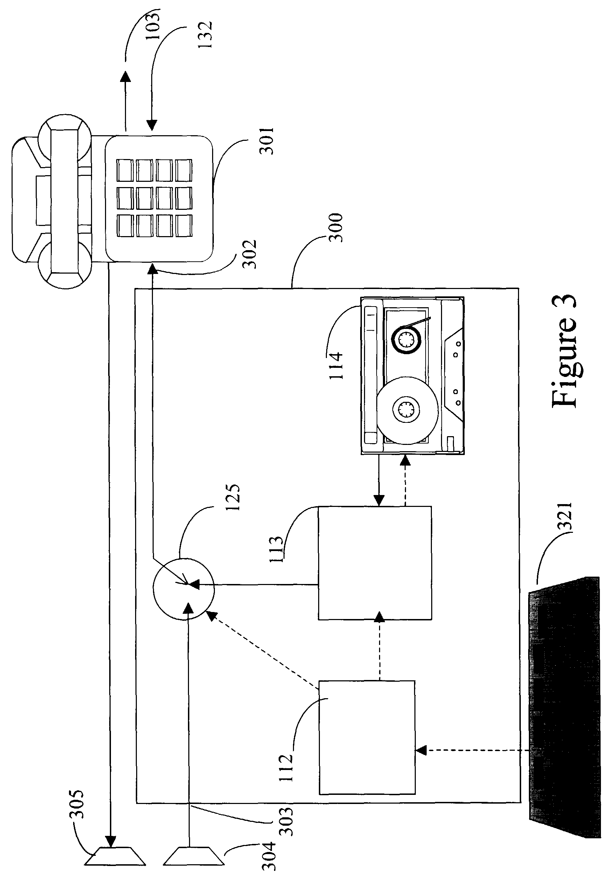

As shown in Figure 3, the speech generation apparatus need not be integral with the telephone handset. It may instead be provided in a unit 300 intermediate between a conventional telephone instrument 301 and a headset or miniature microphone 304, 305. The functions performed by the device 300 are similar to those of the previous embodiment, and corresponding components are given the same reference numerals in both Figures. The device could be used with any telephone 301 equipped with jack flags/sockets 302 for a microphone and earpiece. The device 300 is connected to the telephone 301 by means of these jack flags/sockets, and the headset 304, 305 is connected to the apparatus by a further pair of jack flags/ sockets 303. Alternatively, as shown, the earpiece 305 may be connected directly to the telephone 301, only the microphone 304 (if fitted) being connected through the apparatus 300 and specifically the switch 125. The microphone 304, socket 303, and switch 125 may be omitted if the facility to speak normally is not required.

Whilst listening to the caller using the headset earpiece 305, the user can then select responses using a keyboard 321. The intermediate unit 300 may be a standalone device, or the functionality could be programmed into a general-purpose computer so that a user (perhaps attending a meeting and using a laptop PC) could 'silently' respond to incoming calls directly using the computer keyboard 321.

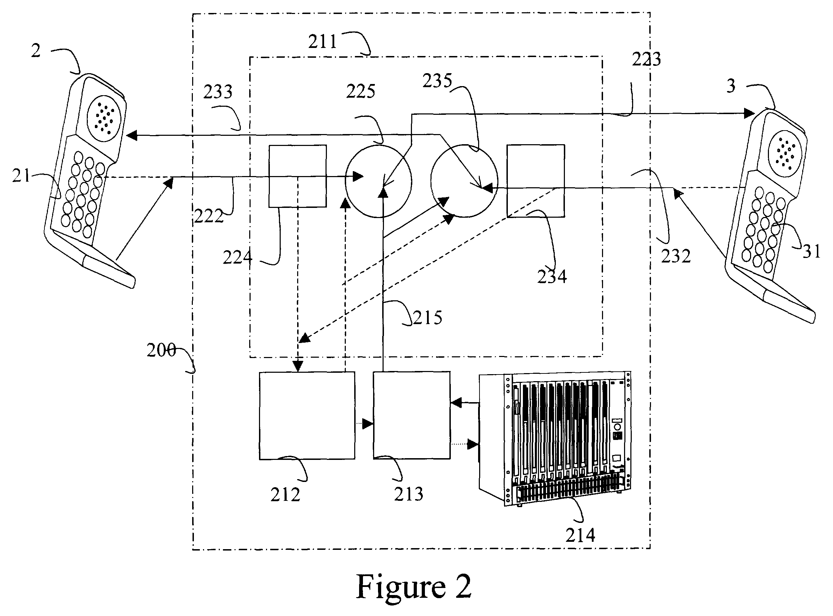

The embodiments of Figures 1 and 3 require all the stored messages to be maintained in the customer's own telephone equipment. This can be readily achieved in a desktop or laptop computer/modem combination, as already discussed with reference to Figure 3. However, it may be difficult to achieve in a telephone handset of reasonable size, particularly if the handset is portable, for example a cellular (mobile) radio telephone. The embodiment of Figure 2 is a telephone network-based apparatus 200, which can be provided in a telephone exchange or as part of an "Intelligent Network" platform, to provide similar functionality whilst overcoming this disadvantage.

The apparatus 200 shown in Figure 2 forms part of a switched connection between two customer apparatuses 2, 3. The apparatus 200 comprises an interface unit 211, a control unit 212, a message generation unit 213 and a store 214. The interface unit 211 has an audio input 222 from the customer apparatus 2, and an audio output 233 to the other customer apparatus 3. It also has monitoring means 224 for identifying control signals transmitted from the customer apparatuses 2, for example DTMF (dual tone multi frequency) tones generated by activating the keypad 21 of the customer apparatus 2, and forwarding them to the control unit 212. The interface unit 211 also includes a switch 225, which can be arranged to select audio signals from the input 222 connected to the first customer apparatus 2, or from an input 215 connected to the message generation unit 213 for transmission to the output 223, for onward transmission to the second customer apparatus 3.

The message generation unit 213 is, in this embodiment, a speech synthesiser which acts under the control of the user 2 to generate speech using a speech element database 214. The resulting synthesised speech is returned to the interface unit 211 for onward transmission to the second user 3.

In use, the user of handset 2, having been called by the user of handset 3 when he is not free to speak, uses the keypad 21 to compose a message for generation by the speech generation unit 213. The message selected is transmitted as a normal speech signal to the telephone 3.

The interface unit 211 also includes duplicate equipment to allow the return path to operate in the same way. This comprises a second signal monitoring means 234 monitoring an input 232 from the second apparatus 3 for control signals, and a second switch 235. This switch 235 operates under the control of the control unit 212, in a similar manner to the switch 225. It selects audio signals from the input 232 connected to the second customer apparatus 3, or from the input 215 connected to the message generation unit 213, for transmission to an output 233, for onward transmission to the first customer apparatus 2. The duplication of equipment allows either user 2, 3 to use the speech generation facility. Indeed, both users 2, 3 can use the facility, to carry out a conversation.

For ease of use, commonly-used messages may be programmed for generation by the generation means 113 (213) in response to a special short sequence of keystrokes. Such messages may include:
"I can hear you but I'm not able to speak at present as I'm in a meeting'
"I understand"
"Can you repeat that please?"
"I can hear you but can't talk at the moment, please give me a moment to move to a quieter/more private location"
Using such phrases a simple conversation can be completed.

In the network-based embodiment of Figure 2, these phrases may be available for use by any user, or they may be customised for each individual user, by pre-programming the message generation unit 213. The message generation unit 213 then selects the messages customised for the current calling party, as identified by Calling Line Identity or other network-based caller identification processes. The customisation may extend to selection of the synthesised voice characteristics such as gender or accent.

Users may pre-record their own messages by entering a special code on the keypad 121, (21), and speaking into the handset 104, (2). The special code causes the control unit 112, (212) to set the switch 125, (225) to connect the microphone to the speech generation unit 113, (213) and sets the speech generation unit 113 (213) into a "recording" mode. The messages can then be stored in the storage medium 114, (214) for later use.

It will be apparent that certain features, such as the methods of generating the voice messages, are interchangeable between the embodiments. In particular, any of the embodiments may use either pre-recorded messages or synthesised speech.

## Claims

1. Telephone apparatus comprising:
message generation means for generating a voice message;
control means, controllable by a first party to a telephone call, for controlling the message generation means; and
transmission means for transmitting said message to the other party or parties to the call.

2. Telephone apparatus according to claim 1, embodied within customer equipment.

3. Telephone apparatus according to claim 1, embodied within telephone network equipment, the control means being arranged to receive control instructions from the first party.

4. Telephone apparatus according to any preceding claim, wherein the control means comprises means to select a message from a plurality of stored messages.

5. Telephone apparatus according to any preceding claim, wherein the control means is controllable by the use of a key pad on a telephone handset.

6. Telephone apparatus according to any preceding claim, wherein the message generation means comprises a store of one or more pre-recorded messages, and playback means for playing the recorded messages.

7. Telephone apparatus according to any preceding claim, wherein the message generation means includes a voice synthesiser, and the control means comprises means for controlling the voice synthesiser to generate voice messages.

8. A method of participating in a telephone conversation comprising the steps of: generating stored or synthesised voice messages under the control of a first party to the call, and transmitting said messages to the other party or parties to the call.

9. A computer program product directly loadable into the internal memory of a digital computer, comprising software code portions for performing the steps of claim 8 when said product is run on a computer.

10. A computer program product stored on a computer usable medium, comprising:
computer-readable data storage means carrying data readable by a computer to generate a voice message, and
computer-readable program means for causing the computer to generate a voice message under the control of a user input.
